# EUROPÄISCHE PATENTANMELDUNG

(11) **EP 2 669 624 A2**
(43) Veröffentlichungstag der Anmeldung: **04.12.2013**
(21) Anmeldenummer: 13168781.6
(22) Anmeldetag: 22.05.2013
(51) Int. Cl.: G01B 21/20

(54) **Verfahren zur Ermittlung eines passenden Rohteils für die Herstellung eines Fertigteils**

(30) Priorität: 29.05.2012 DE 102012104605
(71) Anmelder: Cadenas GmbH, 86153 Augsburg (DE)
(72) Erfinder: Heimbach, Jürgen, 86152 Augsburg (DE); Epple, Frank, 86465 Welden (DE); Schwartz, Heiko, 94127 Neuburg am Inn (DE)
(74) Vertreter: Charrier, Rapp & Liebau

(57) **Zusammenfassung**

Die Erfindung betrifft ein Verfahren zur automatisierten Ermittlung eines passenden Rohteils für die Herstellung eines Fertigteils mit folgenden Schritten:
- Bereitstellen einer Liste von vorhandenen Rohteilen, wobei in der Liste die geometrischen Daten jedes vorhandenen Rohteils verfügbar sind;
- Einlesen von Konstruktionsdaten des herzustellenden Fertigteils, wobei die Konstruktionsdaten die geometrischen Daten des herzustellenden Fertigteils enthalten;
- Vergleichen der geometrischen Daten des herzustellenden Fertigteils mit den geometrischen Daten jedes vorhandenen Rohteils und Ermitteln für jedes Rohteil, ob aus dem jeweiligen Rohteil das herzustellende Fertigteil durch mechanische Bearbeitung herstellbar ist;
- Auswählen derjenigen Rohteile, aus denen das herzustellende Fertigteil durch mechanische Bearbeitung herstellbar ist, als passende Rohteile.

## Beschreibung

Die Erfindung betrifft ein Verfahren zur Ermittlung eines passenden Rohteils für die Herstellung eines Fertigteils aus diesem Rohteil.

In der Fertigungstechnik sind vielfältige Fertigungsverfahren zur Herstellung von geometrisch bestimmten festen Körpern bekannt, wie z. B. mechanisches Bearbeiten eines Rohteils durch Umform- oder Trennverfahren. Bekannte Trennverfahren sind insbesondere zerteilende, spanende und abtragende Verfahren.

Aus dem Stand der Technik sind ferner Verfahren zur Vermessung von Rohteilen und zur Ermittlung, ob aus dem Rohteil durch mechanische Bearbeitung ein maßhaltiges Fertigteil hergestellt werden kann, bekannt. Aus der WO 2008/000411-A ist beispielsweise ein Verfahren bekannt, in dem Rohteile vor ihrer mechanischen Fertigbearbeitung vermessen werden und anschließend ermittelt wird, ob aus dem Rohteil durch die mechanische Fertigbearbeitung ein maßhaltiges Fertigteil hergestellt werden kann. Dabei werden gemessene Ist-Werte des Rohteils mit Soll-Werten einer Soll-Kontur des Fertigteils verglichen. Zur Vermessung des Rohteils wird mittels einer Scanneinrichtung eine Vielzahl von Punkten auf der Oberfläche des Rohteils erfasst und in einer Datenverarbeitungseinrichtung zu einer dreidimensionalen Ist-Kontur des Rohteils zusammengefügt, um diese Ist-Kontur des Rohteils dann mit der Soll-Kontur des Fertigteils zu vergleichen.

Aus der EP 2 244 145-A ist ein Verfahren zur Bearbeitung eines Fertigteils aus einem Rohteil bekannt, wobei das Rohteil mindestens eine mechanisch zu bearbeitende und eine Materialzugabe aufweisende Funktionsfläche umfasst. In dem Verfahren wird zunächst die Geometrie des Rohteils und seine räumliche Lage in einer Werkzeugmaschine erfasst und daraus ein virtueller Ist-Körper erstellt. Bei dem virtuellen Soll-Körper wird eine virtuelle Zugabe vorgesehen und anschließend wird der virtuelle Ist-Körper in den virtuellen Soll-Körper eingepasst und es wird eine virtuelle Schnittmenge aus dem virtuellen Ist-Körper und dem virtuellen Soll-Körper berechnet und durch Variieren der relativen Lage beider virtuellen Körper zueinander maximiert.

Bei der Durchführung von Fertigungsverfahren, in denen aus einem Rohteil ein konstruiertes Fertigteil durch mechanische Bearbeitung des Rohteils hergestellt werden soll, ergibt sich die Aufgabe, ein passendes Rohteil für die Herstellung des konstruierten Fertigteils zu finden. Durch eine geeignete Auswahl eines passenden Rohteils für die Herstellung eines konstruierten Fertigteils können erhebliche Ressourcen, insbesondere Material- und auch Zeit-Ressourcen bei der Durchführung der Fertigungsverfahren eingespart werden, wenn ein optimales Rohteil für die Herstellung des konstruierten Fertigteils gefunden werden kann. Häufig liegt ein Bestand mit einer Mehrzahl von zur Verfügung stehenden Rohteilen vor, aus denen ein konstruiertes Fertigteil durch mechanische Bearbeitung wie z. B. Umformen oder Trennen, hergestellt werden kann. Die Aufgabe der Erfindung besteht darin, aus einem vorhandenen Bestand an Rohteilen ein passendes Rohteil zu finden, welches sich unter dem Gesichtspunkt der Ressourceneffizienz am besten für die Herstellung eines konkreten konstruierten Fertigteils eignet.

In manchen Fällen stellt sich auch die umgekehrte Aufgabe, aus einem vorhandenen Rohteil und einer Vielzahl von möglichen Fertigteilen, die in einem Fertigungsverfahren durch mechanische Bearbeitung des Rohteils herzustellen sind, ein geeignetes Fertigteil zu finden, welches sich unter dem Gesichtspunkt der Ressourceneffizienz am besten aus dem vorhandenen Rohteil fertigen lässt. Der Erfindung liegt daher weiterhin die Aufgabe zugrunde, für ein vorhandenes Rohteil und aus einer Mehrzahl von herzustellenden Fertigteilen ein Fertigteil zu finden, welches unter dem Gesichtspunkt des Ressourceneffizienz am besten aus dem vorhandenen Rohteil durch mechanische Bearbeitung gefertigt werden kann.

Diese Aufgaben werden mit den Verfahren mit den Merkmalen der Ansprüche 1 und 10 sowie mit einem Computerprogrammprodukt mit den Merkmalen des Anspruchs 12 und einer Datenverarbeitungseinrichtung mit den Merkmalen des Anspruchs 14 gelöst. Bevorzugte Ausführungsformen der erfindungsgemäßen Verfahren sind in den Unteransprüchen angegeben.

Das erfindungsgemäße Verfahren zur Ermittlung eines passenden Rohteils für die Herstellung eines Fertigteils umfasst folgende Verfahrensschritte:
- Bereitstellen einer Liste von vorhandenen Rohteilen, wobei in der Liste die geometrischen Daten jedes vorhandenen Rohteils verfügbar sind;
- Einlesen von Konstruktionsdaten des herzustellenden Fertigteils, wobei die Konstruktionsdaten die geometrischen Daten des herzustellenden Fertigteils enthalten;
- Vergleichen der geometrischen Daten des herzustellenden Fertigteils mit den geometrischen Daten jedes vorhandenen Rohteils und Ermitteln für jedes Rohteil, ob aus dem jeweiligen Rohteil das herzustellende Fertigteil durch mechanische Bearbeitung herstellbar ist;
- Auswählen derjenigen Rohteile, aus denen das herzustellende Fertigteil durch mechanische Bearbeitung herstellbar ist, als passende Rohteile.

Als besonders effizient hat es sich erwiesen, beim Vergleichen der geometrischen Daten des herzustellenden Fertigteils mit den geometrischen Daten jedes vorhanden Rohteils in einem Zwischenschritt zunächst die Volumina des herzustellenden Fertigteil und des jeweiligen Rohteils zu vergleichen und diejenigen Rohteile als unbrauchbar auszusortieren, deren Volumen kleiner ist als das Volumen des herzustellenden Fertigteils.

In dem Verfahren zur Ermittlung eines passenden Rohteils für die Herstellung eines Fertigteils wird bevorzugt in dem Verfahrensschritts des Ermittelns, ob aus dem jeweiligen Rohteil das herzustellende Fertigteil durch mechanische Bearbeitung herstellbar ist, eine tolerierbare Obergrenze für den Verschnitt im Rohteil vorgegeben und bei der Ermittlung eines passenden Rohteils berücksichtigt. Weiterhin kann hierbei auch eine tolerierbare Obergrenze für einen möglichen Fehler im Fertigteil vorgegeben und beim Schritt des Ermittelns eines passenden Rohteils berücksichtigt werden. Dies ermöglicht es, auch dann ein für die Herstellung eines konstruierten Fertigteils passendes Rohteil auszuwählen, welches hinsichtlich seiner Außenkontur nicht optimal zu dem herzustellenden Fertigteil passt, bspw. weil das Rohteil an bestimmten Stellen in Bezug auf das herzustellende Fertigteil etwas zu klein ist. Häufig ist eine hundertprozentige Maßhaltung nicht erforderlich und in diesen Fällen kann eine tolerierbare Obergrenze für einen möglichen Fehler im Fertigteil vorgegeben und bei dem Ermittlungsschritt berücksichtigt werden.

Bei Vergleichen der geometrischen Daten des herzustellenden Fertigteils und jedes vorhandenen Rohteils werden zweckmäßig in einem Zwischenschritt dreidimensionale Darstellungen des jeweiligen Rohteils und der Konstruktionsdaten des herzustellenden Fertigteils überlagert. Besonders zweckmäßig ist es dabei, wenn die Konstruktionsdaten des herzustellenden Fertigteils als dreidimensionale CAD-Daten vorliegen.

Eine besonders effiziente Ausführungsform des erfindungsgemäßen Verfahrens sieht beim Vergleichen der geometrischen Daten des herzustellenden Fertigteils mit den geometrischen Daten jedes vorhandenen Rohteils in einem Zwischenschritt eine Prüfung vor, welcher Anteil des herzustellenden Fertigteils innerhalb oder außerhalb der Außenkontur des jeweiligen Rohteils liegt. Diese Daten können dann einem Anwender angezeigt werden, so dass der Anwender auf der Grundlage dieser Daten ein passendes Rohteil für die Herstellung des konstruierten Fertigteils auswählen kann. Die Auswahl passender Rohteile kann auch automatisiert durch die Datenverarbeitungseinrichtung erfolgen, wobei hierbei der innerhalb der Außenkontur des herzustellenden Fertigteils liegende Anteil mit einem vorgegebenen Grenzwert berücksichtigt wird und nur solche Rohteile als passende Rohteile ausgewählt werden, bei denen der innerhalb der Außenkontur des herzustellenden Fertigteils liegende Anteil größer ist als ein vorgegebener Mindestwert. Der Mindestwert kann dabei je nach Bedürfnis ausgewählt werden, und liegt typischerweise bei mehr als 90%.

Die automatisiert als passende Rohteile ausgewählten Rohteile werden zweckmäßig in einer Ergebnisliste eingetragen und können dann beispielsweise in Form einer Tabelle in einer grafischen Anzeigeeinrichtung, beispielsweise auf einem Computerbildschirm, angezeigt werden. Besonders zweckmäßig enthält die Liste der als passende Rohteile ausgewählten Rohteile eine Sortierung, beispielsweise nach dem Verschnitt, der bei der Herstellung des Fertigteils aus dem jeweiligen Rohteil anfallen wird. Der Anwender kann dann unter Berücksichtigung dieses Verschnitts und ggf. weiterer Parameter, wie z. B. den Kosten des Rohteils, das für die Herstellung des konstruierten Fertigteils am besten passende Rohteil auswählen. Die Sortierung der als passende Rohteile ausgewählten Rohteile kann in der Liste auch nach anderen Kriterien oder Parametern erfolgen.

Das erfindungsgemäße Verfahren zur Ermittlung eines aus einem Rohteil durch mechanische Bearbeitung herzustellenden Fertigteils umfasst folgende Schritte:
- Bereitstellen einer Liste von herzustellenden Fertigteilen, wobei in der Liste die geometrischen Daten der herzustellenden Fertigteile verfügbar sind;
- Einlesen von geometrischen Daten eines vorhandenen Rohteils,
- Vergleichen der geometrischen Daten jedes herzustellenden Fertigteils mit den geometrischen Daten des vorhandenen Rohteils und Ermitteln für jedes herzustellende Fertigteil, ob aus dem vorhandenen Rohteil das jeweilige Fertigteil durch mechanische Bearbeitung herstellbar ist;
- Auswählen derjenigen Fertigteile, welche aus dem vorhandenen Rohteil durch mechanische Bearbeitung herstellbar sind, als geeignete Fertigteile.

Die erfindungsgemäße Datenverarbeitungseinrichtung umfasst einen Datenspeicher, eine Dateneingabevorrichtung, eine Datenverarbeitungsvorrichtung und eine grafische Anzeigeeinrichtung, wobei die Datenverarbeitungsvorrichtung zur Durchführung der erfindungsgemäßen Verfahren eingerichtet ist. Die Liste von vorhandenen Rohteilen oder die Listen von herzustellenden Fertigteilen wird dabei in dem Datenspeicher abgespeichert und die Konstruktionsdaten des herzustellenden Fertigteils oder die geometrischen Daten eines vorhandenen Rohteils werden über die Dateneingabevorrichtung eingelesen. In der Datenverarbeitungsvorrichtung läuft ein Datenverarbeitungsprogramm zur Durchführung der erfindungsgemäßen Verfahren. Das Datenverarbeitungsprogramm führt dabei den Vergleich der geometrischen Daten des herzustellenden Fertigteils und jedes Rohteils durch und wählt die als passende Rohteile oder als geeignete Fertigteile ausgewählten Rohteile bzw. Fertigteile aus und listet sie in einer Ergebnisliste auf. Die in der Ergebnisliste aufgelisteten passenden Rohteile bzw. geeignete Fertigteile werden dann in der grafischen Anzeigeeinrichtung, welche beispielsweise ein Computerbildschirm sein kann, angezeigt.

Diese und weitere Vorteile der Erfindung gehen aus dem nachfolgend unter Bezugnahme auf die begleitenden Zeichnungen im Detail beschriebenen Ausführungsbeispiel hervor. Die Zeichnungen zeigen:
- **Figur 1:**: Schematische Schnittdarstellung eines Rohteils und eines daraus herzustellenden Fertigteils;
- **Figur 2:**: Ablaufdiagramm (Struktogramm) einer bevorzugten Ausführungsform des erfindungsgemäßen Verfahrens zur Ermittlung eines passenden Rohteils für die Herstellung eines Fertigteils.

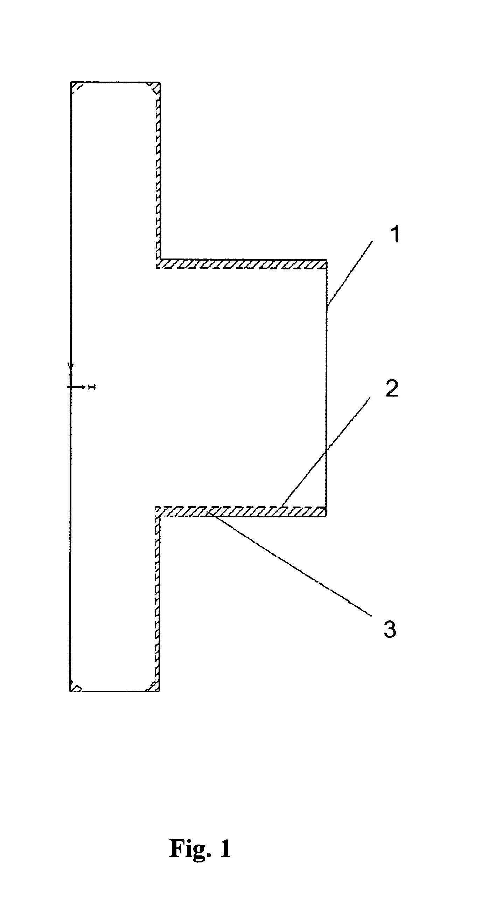

In Figur 1 ist schematisch ein Rohteil 1 sowie ein aus dem Rohteil 1 durch mechanische Bearbeitung, beispielsweise durch Umformen oder zerspanende Bearbeitung, herstellbares Fertigteil 2 gezeigt. Das Rohteil 1 ist dabei in einer durchgezogenen Linie dargestellt und das Fertigteil 2 ist gestrichelt gezeichnet. Wie aus der Figur 1 ersichtlich, weist das Rohteil 1 gegenüber dem Fertigteil 2 bereichsweise einen Überstand auf. Dieser Überstand wird bei der mechanischen Bearbeitung des Rohteils 1, beispielsweise in einem zerspanenden Verfahren,
als Verschnitt 3 von dem Rohteil 1 abgetrennt, damit das Fertigteil 2 aus dem Rohteil 1 entsteht. Bei den Fertigteilen kann es sich um beliebige zwei- oder dreidimensionale Körper handeln. Insbesondere handelt es sich bei den Fertigteilen 2 um mechanische oder elektrische Bauteile. Es kann sich bei dem Fertigteil jedoch auch um andere zwei- oder dreidimensionale Körper handeln.

Die Erfindung geht davon aus, dass von einem herzustellenden Fertigteil 2 zunächst nur Konstruktionsdaten, beispielsweise in Form von dreidimensionalen CAD-Daten vorliegen. Weiterhin geht die Erfindung davon aus, dass ein Bestand an vorhandenen Rohteilen 1 vorhanden ist und beispielsweise in einem Rohteillager bereit gestellt wird. Ziel des erfindungsgemäßen Verfahrens ist es nun, aus dem Bestand von Rohteilen 1 diejenigen Rohteile zu ermitteln, welche sich zur Herstellung eines konkreten Fertigteils 2, von dem die Konstruktionsdaten vorliegen, herstellen lässt. Die Auswahl der passenden Rohteile 1 soll dabei insbesondere unter dem Gesichtspunkt der Ressourceneffizienz erfolgen, d.h., die Fertigung des Fertigteils 2 aus dem Rohteil 1 soll möglichst wenig Verschnitt 3 verursachen und die Fertigung soll möglichst zeiteffizient und kostengünstig vorgenommen werden können.

Zum automatisierten Auffinden passender Rohteile aus dem Bestand von vorhandenen Rohteilen wird das erfindungsgemäße Verfahren zweckmäßig in einer Datenverarbeitungseinrichtung durchgeführt. Die zeichnerisch hier nicht dargestellte Datenverarbeitungseinrichtung zur Durchführung des erfindungsgemäßen Verfahrens umfasst einen Datenspeicher, eine Dateneingabevorrichtung, eine Datenverarbeitungsvorrichtung und eine graphische Anzeigeeinrichtung. Bei der Datenverarbeitungsvorrichtung kann es sich beispielsweise um einen herkömmlichen PC handeln, der mit einem Festplattenspeicher, einer Dateneingabevorrichtung in Form einer Tastatur sowie einer graphischen Anzeigeeinrichtung in Form eines Bildschirms ausgestattet ist. Die Datenverarbeitungsvorrichtung ist zur Durchführung der erfindungsgemäßen Verfahren eingerichtet und weist hierfür ein auf der Datenverarbeitungsvorrichtung laufendes Datenverarbeitungsprogramm auf, welches die Steuerung der erfindungsgemäßen Verfahren vornimmt.

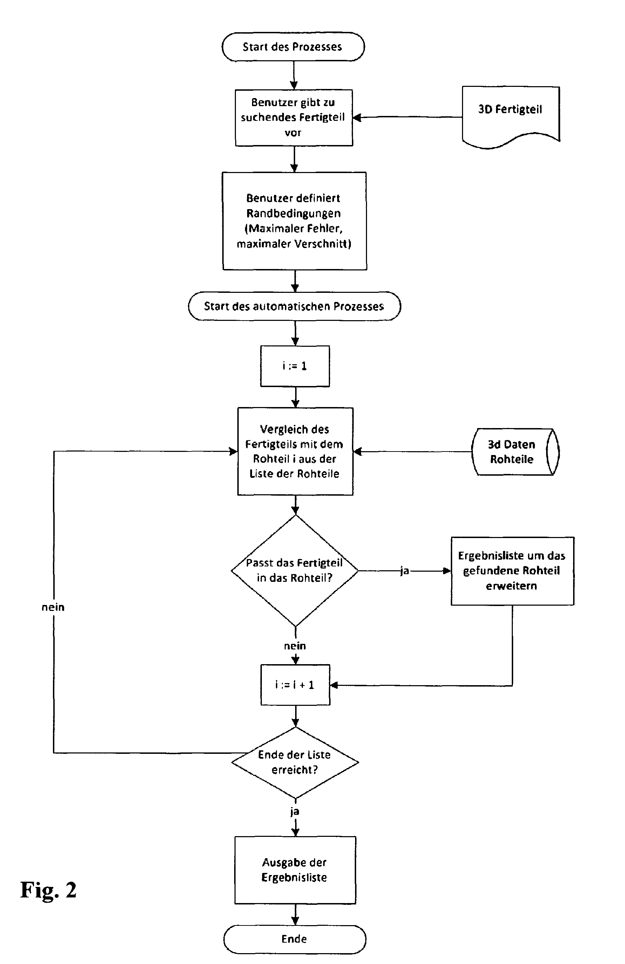

Wie dem Ablaufdiagramm der Figur 2 zu entnehmen ist, startet das erfindungsgemäße Verfahren zur Ermittlung eines passenden Rohteils für die Herstellung eines Fertigteils zunächst durch Eingabe eines zu suchenden Fertigteils. Das Fertigteil liegt dabei noch nicht als physikalisches Objekt vor, sondern lediglich als ein konstruiertes Fertigteil in Form von Konstruktionsdaten. Bei den Konstruktionsdaten handelt es sich zweckmäßig um dreidimensionale CAD-Daten. Die Konstruktionsdaten (CAD-Daten) des herzustellenden Fertigteils werden durch den Benutzer über die Dateneingabevorrichtung der Datenverarbeitungsvorrichtung zugeführt. Hierfür stellt das Datenverarbeitungsprogramm zweckmäßig eine graphische Benutzeroberfläche zur Verfügung, welche auf der graphischen Anzeigeeinrichtung angezeigt wird und über welche der Benutzer die Konstruktionsdaten des herzustellenden Fertigteils, beispielsweise in Form eines dreidimensionalen CAD-Datensatzes eingeben kann.

Der Benutzer kann dann nach Eingabe der Konstruktionsdaten des herzustellenden Fertigteils Randbedingungen definieren und über die Dateneingabevorrichtung dem Datenverarbeitungsprogramm für den weiteren Ablauf des Verfahrens übergeben. Bei den möglichen, vom Benutzer zu definierenden Randbedingungen kann es sich beispielsweise um einen maximal tolerierbaren Fehler bei der Herstellung des Fertigteils oder um eine Obergrenze für einen maximal tolerierbaren Verschnitt bei der Herstellung des Fertigteils aus dem Rohteil handeln. Die Eingabe weiterer oder anderer Randbedingungen ist möglich, wie z.B. die für das Rohteil oder für das nachfolgende Bearbeitungsverfahren für die Herstellung des Fertigteils aus dem Rohteil anfallenden Kosten oder die für das Fertigungsverfahren benötigte Bearbeitungszeit.

In dem Datenspeicher der Datenverarbeitungseinrichtung ist, zweckmäßig in einer Datenbank angelegt, eine Liste von vorhandenen und verfügbaren Rohteilen enthalten. Diese Liste umfasst dabei, ggf. neben weiteren technischen oder wirtschaftlichen Daten, zumindest die geometrischen Daten jedes vorhandenen Rohteils. Unter geometrischen Daten werden hierbei beispielsweise die Länge, die Breite und die Höhe, der Durchmesser und ggf. Krümmungsradien von gekrümmten Oberflächen der vorhandenen Rohteile verstanden. In entsprechender Weise enthalten auch die Konstruktionsdaten des herzustellenden Fertigteils die entsprechenden geometrischen Daten des Fertigteils. Die geometrischen Daten der Rohteile und die Konstruktionsdaten des Fertigteils umfassen insbesondere die Hüllgeometrie (Außenkontur) der Teile.

Die in dem Datenspeicher verfügbaren Daten zu den vorhandenen Rohteilen werden ebenso wie die Konstruktionsdaten des herzustellenden Fertigteils dem Datenverarbeitungsprogramm zur Verfügung gestellt. Das Datenverarbeitungsprogramm vergleicht die geometrischen Daten des herzustellenden Fertigteils mit den geometrischen Daten jedes vorhandenen Rohteils und ermittelt in einem Einzelvergleich für jedes Rohteil, ob aus dem jeweiligen Rohteil das herzustellende Fertigteil durch mechanische Bearbeitung herstellbar ist. Diejenigen Rohteile, aus denen das herzustellende Fertigteil durch mechanische Bearbeitung herstellbar ist, werden dabei als passende Rohteile ausgewählt und in eine Ergebnisliste eingetragen. Die Ergebnisliste wird zweckmäßig beispielsweise in Form einer Tabelle auf der graphischen Anzeigeeinrichtung angezeigt. Der Benutzer kann dann aus der getroffenen Auswahl der passenden Rohteile ein Rohteil auswählen, welches er dann zur Herstellung des Fertigteils verwendet.

Bei dem Einzelvergleich der geometrischen Daten jedes vorhandenen Rohteils mit den geometrischen Daten des herzustellenden Fertigteils kann beispielsweise ein Vergleichsverfahren zur Anwendung kommen, in dem die zu vergleichenden Teile (also das herzustellende Fertigteil und eines der verfügbaren Rohteile) virtuell überlagert werden und die sich bei der virtuellen Überlagerung der Teile ergebenden (dreidimensionalen) Bilder können zur Visualisierung auf der graphischen Anzeigeeinrichtung dargestellt werden.

Alternativ zu einer virtuellen Überlagerung der geometrischen Daten der zu vergleichenden Teile kann auch ein Voxel-Vergleich zur Anwendung kommen. Dabei wird jedes zu vergleichende Teil zunächst in eine Vielzahl kleiner Würfel (sogenannte Voxel, "volumetric pixel") unterteilt und die sich daraus ergebenden Würfelmuster werden übereinander gelegt bzw. miteinander verglichen. Jeder Würfel (Voxel) entspricht hierbei einem Pixel in einem dreidimensionalen Bild. Wie bei 2D-Pixeln werden die Positionen der Würfel (Voxel) nicht explizit gespeichert, sondern implizit aus der Position zu anderen Würfeln (Voxeln) hergeleitet. Es ist dann möglich, für jeden diskreten Würfel (Voxel) eines zu vergleichenden Teils zu bestimmen, ob dieser innerhalb oder außerhalb des Vergleichsteils liegt. Auf diese Weise kann schnell und effizient berechnet werden, welche und wie viele Würfel des einen Teils sich mit den Würfeln des Vergleichsteils überlagern. Die Genauigkeit des Voxel-Vergleichs hängt dabei von der gewählten Größe der Würfel ab (die gewählte Würfelgröße bestimmt die Größenordnung der Genauigkeit). Zweckmäßig kann die Größe der Würfel entsprechend den Erfordernissen an die Genauigkeit des Einzelvergleichs in dem erfindungsgemäßen Verfahren ausgewählt und angepasst werden.

Besonders effizient ist ein Verfahren, bei dem zunächst festgestellt wird, welche Rohteile im Vergleich zu dem herzustellenden Fertigteil ein größeres Gesamtvolumen aufweisen. Diejenigen Rohteile, die ein kleineres Gesamtvolumen als das herzustellende Fertigteil aufweisen, können dabei von vornherein als unbrauchbar aussortiert werden, weil das Fertigteil aus diesen Rohrteilen nicht herstellbar ist. Alle anderen Rohteile, deren Volumen größer ist als das Volumen des herzustellenden Fertigteils, werden als passende Rohteile in die Ergebnisliste aufgenommen. Dieser optionale Verfahrensschritt kann das erfindungsgemäße Verfahren wesentlich beschleunigen. Beim anschließenden Einzelvergleich jedes vorhanden Rohteils mit dem herzustellenden Fertigteil wird ermittelt, welcher Anteil des herzustellenden Fertigteils innerhalb der Außenkontur des jew. Rohteils liegt, um ein Maß für den Verschnitt zu ermitteln, der bei der Herstellung des Fertigteils aus dem jew. Rohteil entstehen würde. Die in der Ergebnisliste aufgenommenen Rohteile werden dann zweckmäßig in der Ergebnisliste in aufsteigender Reihenfolge des entstehenden Verschnitts sortiert (d.h. der geringste Verschnitt erzielt die höchste Wertung und die vorderste Platzierung in der Ergebnisliste).

Es ist jedoch alternativ hierzu auch möglich, innerhalb einer vorgegebenen Grenze Fehler im hergestellten Fertigteil zu tolerieren, beispielsweise wenn es nicht auf eine exakte Formung des Fertigteils ankommt oder wenn beispielsweise die Formung einzelner Teilflächen des Fertigteils weniger wichtig sind als andere Teilflächen. In diesem Fall kann ein tolerierbarer Grenzwert für mögliche Fehler im Fertigteil vorgegeben werden und bei der Auswahl der passenden Rohteile werden dann auch diejenigen Rohteile als passende Rohteile ausgewählt, aus denen ein Fertigteil herstellbar ist, welches Fehler aufweist, die innerhalb des vorgegebenen Toleranzwerts liegen.

Um dem Benutzer anhand der ausgegebenen Ergebnisliste eine Auswahl eines Rohteils aus der Liste der passenden Rohteile zu ermöglichen, wird zweckmäßig in der Ergebnisliste angezeigt, welcher Anteil der herzustellenden Fertigteils innerhalb oder außerhalb der Außenkontur des jeweiligen Rohteils liegt. Weiterhin ist es zweckmäßig, in der Ergebnisliste weitere Daten und Parameter zu den dort als passende Rohteile aufgelisteten Rohteile anzugeben, wie z.B. deren Beschaffungskosten oder die für die mechanische Bearbeitung des Rohteils zu dem Fertigteil benötigte Arbeitszeit. Besonders zweckmäßig ist es, wenn die in der Ergebnisliste aufgelisteten passenden Rohteile sortiert angezeigt werden. Hierbei kann bevorzugt nach verschiedenen Sortierkriterien, wie z.B. nach dem Verschnitt, der bei der Herstellung des Fertigteils aus dem jeweiligen Rohteil entstehen wird, oder auch bspw. nach den Beschaffungskosten des jeweiligen Rohteils sortiert werden.

Das erfindungsgemäße Verfahren kann auch für den umgekehrten Fall eingesetzt werden, bei dem nicht eine Mehrzahl von vorhandenen Rohteilen zur Verfügung steht, aus denen ein bestimmtes, konstruiertes Fertigteil herzustellen ist, sondern wenn eine Mehrzahl von herzustellende Fertigteile vorgegeben ist, welche alle aus einem einzigen verfügbaren Rohteil hergestellt werden können. Das erfindungsgemäße Verfahren kann in diesem Fall so eingesetzt werden, dass aus dem Bestand der mehreren herzustellenden Fertigteile dasjenige Fertigteil ausgesucht wird, welches unter dem Gesichtspunkt der Ressourceneffizienz am besten aus dem einzigen vorhandenen Rohteil hergestellt werden kann. Bei diesem Verfahrensablauf wird zunächst eine Liste der mehreren, herzustellenden Fertigteile bereit gestellt, wobei in dieser Liste die geometrischen Daten der herzustellenden Fertigteile in Form von Konstruktionsdaten verfügbar sind. Weiterhin werden bei dieser Verfahrensführung die geometrischen Daten eines vorhandenen Rohteils eingelesen bzw. über die Dateneingabevorrichtung dem Datenverarbeitungsprogramm zur Verfügung gestellt. Das Datenverarbeitungsprogramm vergleicht dann die geometrischen Daten jedes herzustellenden Fertigteils mit den geometrischen Daten des vorhandenen Rohteils in einem Einzelvergleich und ermittelt für jedes herzustellendes Fertigteil, ob aus dem vorhandenen Rohteil das jeweilige Fertigteil durch mechanische Bearbeitung herstellbar ist. Schließlich werden auch hier diejenigen Fertigteile als geeignete Fertigteile ausgewählt, welche aus dem vorhandenen Rohteil durch mechanische Bearbeitung herstellbar sind.

In den erfindungsgemäßen Verfahren ist es auch möglich, mehrere Suchteile (d.h. mehrere zu suchende Fertigteile bzw. mehrere zu suchende Rohteile) gleichzeitig anzugeben. Die Suchund Vergleichsschritte der erfindungsgemäßen Verfahren werden dann in der Datenverarbeitungsvorrichtung gleichzeitig parallel zueinander ausgeführt und es wird für jedes Suchteil eine Ergebnisliste erzeugt.

## Patentansprüche

1. Verfahren zur automatisierten Ermittlung eines passenden Rohteils für die Herstellung eines Fertigteils, welches in einer Datenverarbeitungsvorrichtung ausgeführt wird und folgende Schritte umfasst:
- Bereitstellen einer Liste von vorhandenen Rohteilen, wobei in der Liste die geometrischen Daten jedes vorhandenen Rohteils verfügbar sind;
- Einlesen von Konstruktionsdaten des herzustellenden Fertigteils, wobei die Konstruktionsdaten die geometrischen Daten des herzustellenden Fertigteils enthalten;
- Vergleichen der geometrischen Daten des herzustellenden Fertigteils mit den geometrischen Daten jedes vorhandenen Rohteils und Ermitteln für jedes Rohteil, ob aus dem jeweiligen Rohteil das herzustellende Fertigteil durch mechanische Bearbeitung herstellbar ist;
- Auswählen derjenigen Rohteile, aus denen das herzustellende Fertigteil durch mechanische Bearbeitung herstellbar ist, als passende Rohteile.

2. Verfahren nach Anspruch 1, **dadurch gekennzeichnet, dass** beim Ermitteln, ob aus dem jeweiligen Rohteil das herzustellende Fertigteil durch mechanische Bearbeitung herstellbar ist, eine tolerierbare Obergrenze für den Verschnitt im Rohteil und/oder eine tolerierbare Obergrenze für Fehler im Fertigteil berücksichtigt wird.

3. Verfahren nach Anspruch 1 oder 2, **dadurch gekennzeichnet, dass** beim Vergleichen der geometrischen Daten des herzustellenden Fertigteils mit den geometrischen Daten jedes vorhandenen Rohteils in einem Zwischenschritt zunächst die Volumina des herzustellenden Fertigteils und des jeweiligen Rohteils verglichen und diejenigen Rohteile als unbrauchbar aussortiert werden, deren Volumen kleiner ist als das Volumen des herzustellenden Fertigteils.

4. Verfahren nach einem der voranstehenden Ansprüche, **dadurch gekennzeichnet, dass** beim Vergleichen der geometrischen Daten des herzustellenden Fertigteils mit den geometrischen Daten jedes vorhandenen Rohteils in einem Zwischenschritt dreidimensionale Darstellungen des jeweiligen Rohteils und der Konstruktionsdaten des herzustellenden Fertigteils überlagert werden.

5. Verfahren nach einem der voranstehenden Ansprüche, **dadurch gekennzeichnet, dass** beim Vergleichen der geometrischen Daten des herzustellenden Fertigteils mit den geometrischen Daten jedes vorhandenen Rohteils in einem Zwischenschritt ermittelt wird, welcher Anteil des herzustellenden Fertigteils innerhalb oder außerhalb der Außenkontur des jeweiligen Rohteils liegt.

6. Verfahren nach Anspruch 5, **dadurch gekennzeichnet, dass** diejenigen Rohteile als passende Rohteile ausgewählt werden, bei denen der innerhalb der Außenkontur des herzustellenden Fertigteils liegende Anteil innerhalb eines vorgegebenen Grenzwerts liegt.

7. Verfahren nach einem der voranstehenden Ansprüche, **dadurch gekennzeichnet, dass** die als passende Rohteile ausgewählten Rohteile in einer Ergebnisliste eingetragen werden.

8. Verfahren nach einem der voranstehenden Ansprüche, **dadurch gekennzeichnet, dass** die als passende Rohteile ausgewählten Rohteile in einer graphischen Anzeigeeinrichtung und insbesondere auf einem Bildschirm angezeigt werden.

9. Verfahren nach einem der Ansprüche 7 oder 8, **dadurch gekennzeichnet, dass** die als passende Rohteile ausgewählten Rohteile in der Liste oder in der graphischen Anzeigeeinrichtung sortiert nach dem Verschnitt eingetragen bzw.
angezeigt werden, der bei der Herstellung des Fertigteils aus dem jeweiligen Rohteil entstehen wird.

10. Verfahren zur automatisierten Ermittlung eines aus einem Rohteil durch mechanische Bearbeitung herzustellenden Fertigteils, welches in einer Datenverarbeitungsvorrichtung ausgeführt wird und folgende Schritte umfasst:
- Bereitstellen einer Liste von herzustellenden Fertigteilen, wobei in der Liste die geometrischen Daten der herzustellenden Fertigteile verfügbar sind;
- Einlesen von geometrischen Daten eines vorhandenen Rohteils,
- Vergleichen der geometrischen Daten jedes herzustellenden Fertigteils mit den geometrischen Daten des vorhandenen Rohteils und Ermitteln für jedes herzustellende Fertigteil, ob aus dem vorhandenen Rohteil das jeweilige Fertigteil durch mechanische Bearbeitung herstellbar ist;
- Auswählen derjenigen Fertigteile, welche aus dem vorhandenen Rohteil durch mechanische Bearbeitung herstellbar sind, als geeignete Fertigteile.

11. Verfahren nach einem der voranstehenden Ansprüche, **dadurch gekennzeichnet, dass** die geometrischen Daten des oder jedes herzustellenden Fertigteils und die geometrischen Daten des oder jedes vorhandenen Rohteils als 3D-Datensätze und insbesondere als dreidimensionale CAD-Daten vorliegen.

12. Computerprogrammprodukt mit einem Programmcode, der beim Ausführen auf einer Datenverarbeitungsvorrichtung, insbesondere einem Computer, die Schritte der Verfahren nach einem der Ansprüche 1 bis 11 automatisiert durchführt.

13. Computerprogrammprodukt nach Anspruch 12, **dadurch gekennzeichnet, dass** der Programmcode auf einem computerlesbaren mobilen Datenträger oder in einem internen Datenspeicher einer Datenverarbeitungseinrichtung, insbesondere einem Computer, gespeichert ist.

14. Datenverarbeitungseinrichtung mit einem Datenspeicher, einer Dateneingabevorrichtung, einer Datenverarbeitungsvorrichtung und einer graphischen Anzeigeeinrichtung, **dadurch gekennzeichnet, dass** die Datenverarbeitungsvorrichtung zur Durchführung der Verfahren nach den Ansprüchen 1 und 11 eingerichtet ist und insbesondere ein Computerprogrammprodukt nach Anspruch 12 umfasst, welches beim Ausführen auf der Datenverarbeitungsvorrichtung die Schritte der Verfahren nach einem der Ansprüche 1 bis 11 automatisiert durchführt, wobei die Liste von vorhandenen Rohteilen oder die Liste von herzustellenden Fertigteilen in dem Datenspeicher abgespeichert sind, die Konstruktionsdaten des herzustellenden Fertigteils oder die geometrischen Daten eines vorhandenen Rohteils über die Dateneingabevorrichtung eingelesen werden und der Vergleich der geometrischen Daten des herzustellenden Fertigteils mit den geometrischen Daten jedes Rohteils mittels eines in der Datenverarbeitungsvorrichtung ablaufenden Datenverarbeitungsprogramms erfolgt und die als passende Rohteile oder als geeignete Fertigteile ausgewählten Rohteile bzw. Fertigteile in der graphischen Anzeigeeinrichtung angezeigt werden.
